# EUROPEAN PATENT SPECIFICATION

(11) **EP 4 030 424 B1**
(45) Date of publication and mention of the grant of the patent: **07.02.2024**
(21) Application number: 22176533.2
(22) Date of filing: 31.05.2022
(51) Int. Cl.: G10L 15/22, B60R 16/037, G10L 15/18, G10L 15/08, G10L 21/0272

(54) **METHOD AND APPARATUS OF PROCESSING VOICE FOR VEHICLE, ELECTRONIC DEVICE AND MEDIUM**
VERFAHREN UND VORRICHTUNG ZUM VERARBEITEN VON SPRACHE IN EINEM FAHRZEUG, ELEKTRONISCHE VORRICHTUNG UND MEDIUM
PROCÉDÉ ET DISPOSITIF DE TRAITEMENT DE LA PAROLE DANS UN VÉHICULE, DISPOSITIF ÉLECTRONIQUE ET SUPPORT DE STOCKAGE

(30) Priority: 03.06.2021 CN 202110621889
(43) Date of publication of application: 20.07.2022
(73) Proprietor: Apollo Intelligent Connectivity (Beijing) Technology Co., Ltd., Beijing 100176 (CN)
(72) Inventor: ZHOU, Yi, Beijing, 100176 (CN); ZUO, Shengyong, Beijing, 100176 (CN)
(74) Representative: Zimmermann, Tankred Klaus

(56) References cited:
- CN-A- 110 648 663
- CN-A- 111 599 357
- CN-A- 112 017 659
- US-A1- 2019 237 067
- US-A1- 2020 382 863

## Description

### TECHNICAL FIELD

The present disclosure relates to a field of computer technology, in particular to a field of voice recognition, and specifically to a method and an apparatus of processing a voice for a vehicle, an electronic device, a medium and a program product.

### BACKGROUND

In the related art, a vehicle has a voice recognition capability, and a voice receiver and a voice processor are usually arranged in the vehicle. The voice receiver is used for receiving voice data, and the voice processor is used for recognizing the received voice data. However, in the related art, the cost of configuring the voice receiver for the vehicle is relatively high.

CN 112 017 659 A discloses a multi-sound-area voice signal processing method. The method includes the steps that a voice signal of at least one to-be-identified sound area in a plurality of sound areas is received; if the at least one to-be-identified sound area is a non-main-driving sound area, the state of the vehicle is obtained, and the state of the vehicle is that an unfinished main-driving sound area task exists or an unfinished main-driving sound area task does not exist; a main driving sound area comprises a main driving position, and the main frame sound area task is a task related to a voice signal of the main driving sound area; and the voice signal of the at least one to-be-identified sound area is processed according to the state of the vehicle.

US 2019/237067 A1 discloses a method for providing voice command operation in a passenger vehicle cabin having multiple occupants. The method operates to monitor microphone data relating to voice commands within a vehicle cabin and determine whether the microphone data includes wake-up-word data. When the wake-up-word data relates to more than one of a plurality of vehicle cabin zones and more than one wake-up-words are coincident, the method and device operate to monitor respective microphone data for voice command data from each of the more than one of the respective ones of the plurality of vehicle cabin zones. Upon detection, the voice command data may be processed to produce respective vehicle device commands and the vehicle device command(s) can be transmitted to effect the voice command data.

CN 110 648 663 A discloses a vehicle-mounted audio management method. According to the method, a speech signal is collected and processed, a control intention, a target vehicle-mounted audio source and a target output region are determined, and output control is performed on the target vehicle-mounted audio source in the target output region according to the control intention.

### SUMMARY

The present disclosure provides a method of processing a voice for a vehicle according to claim 1, an apparatus of processing a voice for a vehicle according to claim 6, an electronic device according to claim 9, a medium according to claim 10, and a program product according to claim 11.

It should be understood that the content described in this section is not intended to identify critical or important features of embodiments of the disclosure, nor is it intended to limit the scope of the disclosure. Other features of the present disclosure will become readily understood by the following description.

### BRIEF DESCRIPTION OF THE DRAWINGS

The drawings are used for better understanding of the present solution, and do not constitute a limitation to the present disclosure, in which:
FIG. 1 schematically shows an application scene for a method and an apparatus of processing a voice for a vehicle according to an embodiment of the present disclosure;
FIG. 2 schematically shows a flowchart of a method of processing a voice for a vehicle according to an embodiment of the present disclosure;
FIG. 3 schematically shows a flowchart of a method of processing a voice for a vehicle according to another embodiment of the present disclosure;
FIG. 4 schematically shows a schematic diagram of a method of processing a voice for a vehicle according to an embodiment of the present disclosure;
FIG. 5 schematically shows a block diagram of an apparatus of processing a voice for a vehicle according to an embodiment of the present disclosure; and
FIG. 6 is a block diagram of an electronic device used to implement voice processing in the embodiments of the present disclosure.

### DETAILED DESCRIPTION OF EMBODIMENTS

The following describes exemplary embodiments of the present disclosure with reference to the drawings, which include various details of the embodiments of the present disclosure to facilitate understanding, and should be regarded as merely exemplary. Therefore, those skilled in the art should recognize that various changes and modifications may be made to the embodiments described herein without departing from the scope of the appended claims. Likewise, for clarity and conciseness, descriptions of well-known functions and structures are omitted in the following description.

The terms used herein are for the purpose of describing specific embodiments only and are not intended to limit the present disclosure. The terms "comprising", "including", etc. used herein indicate the presence of the feature, step, operation and/or part, but do not exclude the presence or addition of one or more other features, steps, operations or parts.

All terms used herein (including technical and scientific terms) have the meanings generally understood by those skilled in the art, unless otherwise defined. It should be noted that the terms used herein shall be interpreted to have meanings consistent with the context of this specification, and shall not be interpreted in an idealized or too rigid way.

In the case of using the expression similar to "at least one of A, B and C", it should be explained according to the meaning of the expression generally understood by those skilled in the art (for example, "a system having at least one of A, B and C" should include but not be limited to a system having only A, a system having only B, a system having only C, a system having A and B, a system having A and C, a system having B and C, and/or a system having A, B and C).

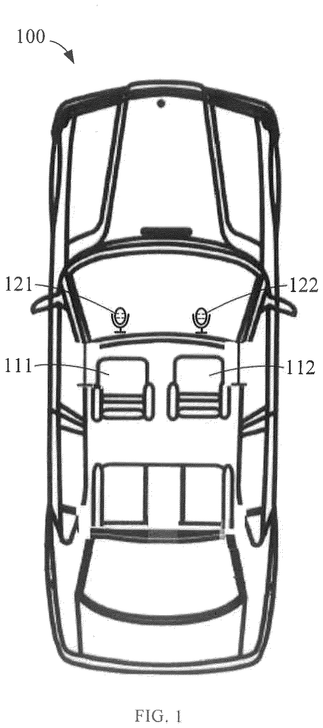

FIG. 1 is a schematic diagram of an exemplary system architecture for a method and an apparatus of processing a voice for a vehicle according to an embodiment of the present disclosure. It should be noted that FIG. 1 is only an example of a system architecture to which the embodiments of the present disclosure may be applied, so as to help those skilled in the art to understand the technical content of the present disclosure, but it does not mean that the embodiments of the present disclosure may not be used for other devices, systems, environments or scenes.

As shown in FIG. 1, the application scene according to this embodiment may include a vehicle 100. The inside of the vehicle 100 includes, for example, a plurality of regions, and the plurality of regions include, for example, a main driving region 111 and a sub driving region 112. The plurality of regions may also include a rear seat region and the like.

For example, a plurality of voice receivers may be provided inside the vehicle 100 to receive a voice data. The voice receiver 121 is used, for example, to receive a voice data from the main driving region 111, and the voice receiver 122 is used, for example, to receive a voice data from the sub driving region 112. The vehicle 100 may perform different operations on the voice data from different regions.

For example, after the voice data from the main driving region 111 is received, operations such as opening windows, turning on the air conditioner, and navigating are performed based on the voice data. After the voice data from the sub driving region 112 is received, operations such as playing music and checking the weather forecast are performed based on the voice data.

However, there is a problem of high cost when the vehicle 100 is provided with the plurality of voice receivers.

In view of this, the embodiments of the present disclosure provide a method of processing a voice for a vehicle. The method of processing a voice for a vehicle includes following operations. An initial voice data is separated in response to receiving the initial voice data from a plurality of regions inside the vehicle, so as to obtain a plurality of voice sub-data and a description information for each voice sub-data of the plurality of voice sub-data. The plurality of voice sub-data correspond to the plurality of regions respectively, and the description information for each voice sub-data indicates the region corresponding to the each voice sub-data in the plurality of regions. Next, a voice working mode of the vehicle is determined based on the plurality of voice sub-data.

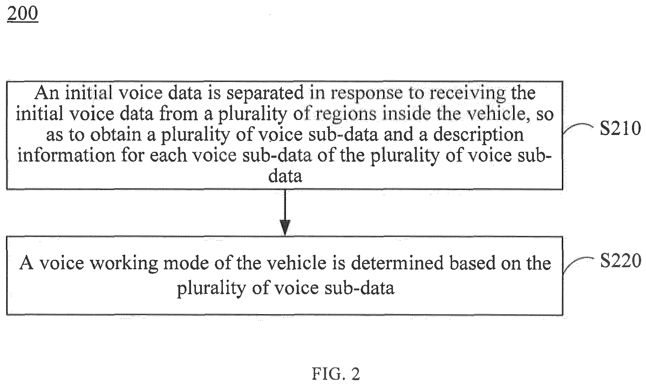

The following describes a method of processing a voice for a vehicle according to an exemplary embodiment of the present disclosure with reference to FIGS. 2 to 4 and in conjunction with the application scene of FIG. 1.

FIG. 2 schematically shows a flowchart of a method of processing a voice for a vehicle according to an embodiment of the present disclosure.

As shown in FIG. 2, the method of processing a voice for a vehicle according to the embodiment of the present disclosure may include, for example, operations S210 to S220.

In operation S210, an initial voice data is separated in response to receiving the initial voice data from a plurality of regions inside the vehicle, so as to obtain a plurality of voice sub-data and a description information for each voice sub-data of the plurality of voice sub-data.

In operation S220, a voice working mode of the vehicle is determined based on the plurality of voice sub-data.

Exemplarily, the vehicle is, for example, provided with a voice receiver and a voice processor, and the voice receiver may include a microphone. The vehicle may receive the initial voice data from the plurality of regions through the voice receiver. After the initial voice data is received, the initial voice data is separated by using the voice processor, and the initial voice data is separated into a plurality of voice sub-data and a description information for each voice sub-data of the plurality of voice sub-data. The plurality of voice sub-data correspond to the plurality of regions respectively, and the description information for each voice sub-data indicates the region corresponding to the each voice sub-data in the plurality of regions.

After the plurality of voice sub-data are obtained through the separation processing, the vehicle may determine the voice working mode of the vehicle based on the plurality of voice sub-data respectively. The voice working mode, for example, indicates how to process a related voice data subsequently received by the vehicle and whether to perform a related operation based on the voice.

According to the embodiments of the present disclosure, the vehicle may receive the initial voice data from the plurality of regions through one voice receiver, and the initial voice data is separated to obtain the plurality of voice sub-data corresponding to the plurality of regions respectively. It is not required for the vehicle to configure a voice receiver for each of the plurality of regions, which may reduce the cost of the vehicle by reducing the number of voice receivers. In addition, compared to receiving a voice data from a plurality of regions through a plurality of voice receivers respectively, the voice data is received through one voice receiver in the embodiments of the present disclosure, thereby reducing the data amount of the received voice data. In this way, the calculation amount for the vehicle to process the voice is reduced, and the voice processing performance of the vehicle is improved.

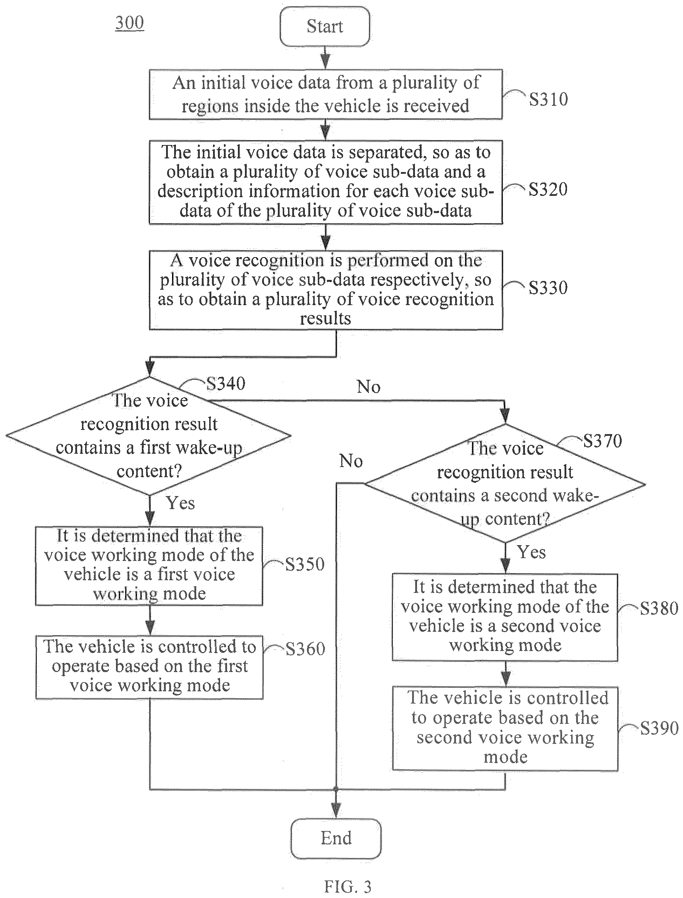

FIG. 3 schematically shows a flowchart of a method of processing a voice for a vehicle according to another embodiment of the present disclosure.

As shown in FIG. 3, the method 300 of processing a voice for a vehicle according to the embodiment of the present disclosure may include, for example, operations S310 to S390.

In operation S310, an initial voice data from a plurality of regions inside the vehicle is received.

In operation S320, the initial voice data is separated, so as to obtain a plurality of voice sub-data and a description information for each voice sub-data of the plurality of voice sub-data.

For example, the initial voice data is separated by using a blind source separation algorithm, and the initial voice data is separated into a plurality of voice sub-data corresponding to the plurality of regions respectively. The plurality of regions include, for example, a main driving region and a sub driving region. The plurality of voice sub-data include a first voice sub-data and a second voice sub-data. A description information for the first voice sub-data indicates that the first voice sub-data is from the main driving region, and a description information for the second voice sub-data indicates that the second voice sub-data is from the sub driving region.

In operation S330, a voice recognition is performed on the plurality of voice sub-data respectively, so as to obtain a plurality of voice recognition results, and the plurality of voice recognition results correspond to the plurality of voice sub-data respectively.

Exemplarily, a voice working mode of the vehicle is determined based on the plurality of voice recognition results. For example, it may be determined whether the voice recognition result corresponding to the first voice sub-data contains a first wake-up content or not and it may be determined whether the voice recognition result corresponding to the second voice sub-data contains a second wake-up content or not.

In an example, after the plurality of voice recognition results corresponding to the plurality of voice sub-data are obtained, it may be both determined whether the voice recognition result corresponding to the first voice sub-data contains a first wake-up content or not and whether the voice recognition result corresponding to the second voice sub-data contains a second wake-up content or not.

In another example, after the plurality of voice recognition results corresponding to the plurality of voice sub-data are obtained, it is possible to first determine whether the voice recognition result corresponding to the first voice sub-data contains a first wake-up content or not and then determine whether the voice recognition result corresponding to the second voice sub-data contains a second wake-up content or not. The specific process is such as operation S340 to operation S390.

In operation S340, it is determined whether the voice recognition result corresponding to the first voice sub-data contains the first wake-up content or not. If the voice recognition result corresponding to the first voice sub-data contains the first wake-up content, then operation S350 is performed, otherwise, operation S370 is performed. The first wake-up content includes, for example, a specific wake-up word.

In operation S350, it is determined that the voice working mode of the vehicle is a first voice working mode, in response to the voice recognition result corresponding to the first voice sub-data containing the first wake-up content.

In operation S360, the vehicle is controlled to operate based on the first voice working mode.

Controlling the vehicle to operate based on the first voice working mode includes following operations. A third voice sub-data from the main driving region is extracted from a received first target voice data, a voice recognition is performed on the third voice sub-data to obtain a first operation instruction, and an operation is performed based on the first operation instruction.

For example, after the first wake-up content is recognized, the voice receiver of the vehicle may continue to receive the first target voice data. The first target voice data is from, for example, the main driving region and the sub driving region. It should be noted that even if a user only speaks in the main driving region, the sound of the main driving region may be transmitted to the sub driving region due to the divergence and reflection of the sound. Alternatively, there are other noises in the sub driving region, so that the first target voice data usually includes sounds from the main driving region and the sub driving region.

The third voice sub-data from the main driving region may be extracted from the received first target voice data by the vehicle. For example, the first target voice data is separated into a plurality of voice sub-data by using the blind source separation algorithm, and the plurality of voice sub-data includes the voice sub-data corresponding to the main driving region and the voice sub-data corresponding to the sub driving region. Then the third voice sub-data from the main driving region is extracted from the plurality of voice sub-data.

Next, the vehicle performs the voice recognition on the third voice sub-data, so as to obtain the first operation instruction, and the first operation instruction is associated with the main driving region, and the operation is performed based on the first operation instruction. The first operation instruction obtained by performing the voice recognition on the third voice sub-data includes, for example, important instructions such as "open the window", "turn on the air conditioner", and "navigate".

In operation S370, it is determined whether the voice recognition result corresponding to the second voice sub-data contains the second wake-up content or not. If the voice recognition result corresponding to the second voice sub-data contains the second wake-up content, operation S380 is performed, otherwise, the operations terminate. The second wake-up content includes, for example, a specific wake-up word.

In operation S380, it is determined that the voice working mode of the vehicle is a second voice working mode, in response to the voice recognition result corresponding to the second voice sub-data containing the second wake-up content.

In operation S390, the vehicle is controlled to operate based on the second voice working mode.

Controlling the vehicle to operate based on the second voice working mode includes following operations. A fourth voice sub-data from the sub driving region is extracted from a received second target voice data, a voice recognition is performed on the fourth voice sub-data to obtain a second operation instruction, and an operation is performed based on the second operation instruction.

For example, after the second wake-up content is recognized, the voice receiver of the vehicle may continue to receive the second target voice data. The second target voice data is from, for example, the main driving region and the sub driving region. It should be noted that even if a user only speaks in the sub driving region, the sound of the sub driving region may be transmitted to the main driving region due to the divergence and reflection of the sound. Alternatively, there are other noises in the main driving region, so that the second target voice data usually includes sounds from the main driving region and the sub driving region.

The fourth voice sub-data from the sub driving region may be extracted from the received second target voice data by the vehicle. For example, the second target voice data is separated into a plurality of voice sub-data by using the blind source separation algorithm, and the plurality of voice sub-data includes the voice sub-data corresponding to the main driving region and the voice sub-data corresponding to the sub driving region. Then the fourth voice sub-data from the sub driving region is extracted from the plurality of voice sub-data.

Next, the vehicle performs the voice recognition on the fourth voice sub-data to obtain the second operation instruction, the second operation instruction is associated with the sub driving region, and the operation is performed based on the second operation instruction. The second operation instruction obtained by performing the voice recognition on the fourth voice sub-data includes, for example, unimportant instructions such as "play music" and "check weather forecast".

In the embodiments of the present disclosure, usually only the first voice working mode or the second voice working mode is in an awake state at the same time. When the initial voice data includes both the first wake-up content and the second wake-up content, the first voice working mode corresponding to the main driving region is preferentially woken up. When the initial voice data does not include the first wake-up content but includes the second wake-up content, the second voice working mode is woken up.

According to the embodiments of the present disclosure, the vehicle may receive the initial voice data for the plurality of regions through one voice receiver, and the initial voice data is separated to obtain the plurality of voice sub-data corresponding to the plurality of regions respectively, then the plurality of voice sub-data are recognized respectively to obtain the voice recognition results, and the voice working mode is determined based on the voice recognition results. The first voice work mode for the main driving region is different from the second voice work mode for the sub driving region, so that the vehicle implements a plurality of modes for voice recognition.

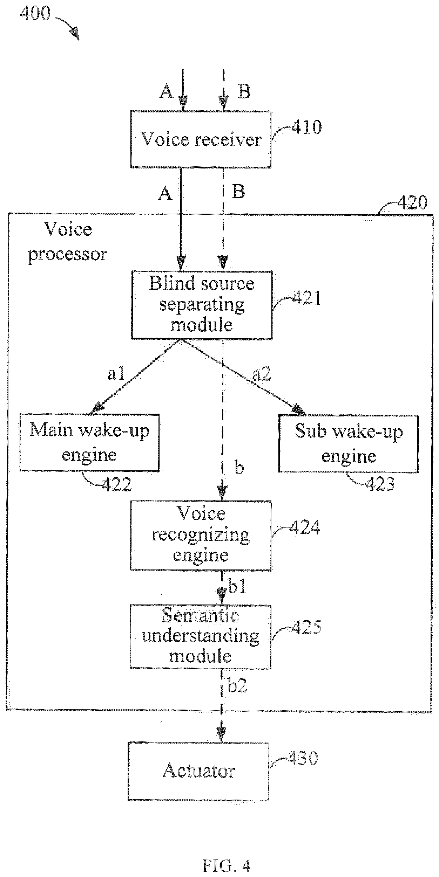

FIG. 4 schematically shows a schematic diagram of a method of processing a voice for a vehicle according to an embodiment of the present disclosure.

As shown in FIG. 4, the vehicle 400 of the embodiment of the present disclosure may include a voice receiver 410, a voice processor 420 and an actuator 430. The voice processor 420 includes, for example, a blind source separating module 421, a main wake-up engine 422, a sub wake-up engine 423, a voice recognizing engine 424 and a semantic understanding module 425.

The voice receiver 410 includes, for example, a microphone, and the microphone is used to, for example, receive a voice data from a main driving region and a sub driving region.

After the voice receiver 410 receives an initial voice data A, the initial voice data A is sent to the blind source separating module 421 for separation processing, so as to obtain a plurality of voice sub-data and a description information for each voice sub-data of the plurality of voice sub-data. The plurality of voice sub-data include, for example, a first voice sub-data a1 and a second voice sub-data a2, the description information for the first voice sub-data a1, for example, indicates that the first voice sub-data a1 is from the main driving region, and the description information for the second voice sub-data a2, for example, indicates that the second voice sub-data a2 is from the sub driving region.

In an example, the blind source separating module 421 uses a blind source separation algorithm to separate voice, and a separation result includes the voice sub-data and the description information for describing a source of the voice sub-data. The description information may include an angle information, and the angle information includes, for example, a first angle interval and a second angle interval. The first angle interval is, for example, [0° 90°), and the second angle interval is, for example, [90° 180°]. An angle in the description information for the first voice sub-data a1 from the main driving region is, for example, within [0°90°), and an angle in the description information for the second voice sub-data a2 from the sub driving region is, for example, within [90°180°]. When the blind source separation algorithm is used to separate the voice data, for example, the source of each voice sub-data may be determined by calculating direction of arrival (DOA) of the voice.

Next, the first voice sub-data a1 is sent to the main wake-up engine 422 for recognition, so as to obtain a voice recognition result for the first voice sub-data a1. When the voice recognition result includes a first wake-up content, it is determined that the voice working mode of the vehicle is a first voice working mode.

The second voice sub-data a2 is sent to the sub wake-up engine 423, so as to obtain a voice recognition result for the second voice sub-data a2. When the voice recognition result includes a second wake-up content, it is determined that the voice working mode of the vehicle is a second voice working mode.

Take the voice working mode of the vehicle as the first voice working mode as an example. In the first voice working mode, the voice receiver 410 of the vehicle may continue to receive a first target voice data B. The first target voice data B includes, for example, a voice of a user from the main driving region. The blind source separating module 421 may separate the first target voice data B and extract a third voice sub-data b from the main driving region.

Then, the blind source separating module 421 sends the extracted third voice sub-data b to the voice recognizing engine 424 for voice recognition, so as to obtain a voice recognition result b1. The voice recognition result b1 includes, for example, the text "open the window", "turn on the air conditioner", "navigate" and so on. The voice recognizing engine 424 sends the voice recognition result b1 to the semantic understanding module 425 for semantic understanding, so as to determine a first operation instruction b2 corresponding to the text. For example, the first operation instruction b2 corresponding to the text "open the window" is a window opening instruction.

Next, the first operation instruction b2 is sent to the actuator 430, and the actuator 430 performs related operations based on the first operation instruction b2. For example, the actuator 430 opens a window based on the window opening instruction.

It should be understood that, in the embodiments of the present disclosure, the vehicle may receive the initial voice data from the plurality of regions through one voice receiver, and the initial voice data is separated to obtain the plurality of voice sub-data corresponding to the plurality of regions respectively, which reducing the cost of the vehicle. In addition, the voice data is received through one voice receiver, thereby reducing the data amount of the received voice data. In this way, the calculation amount for the vehicle to process the voice is reduced, and the voice processing performance of the vehicle is improved.

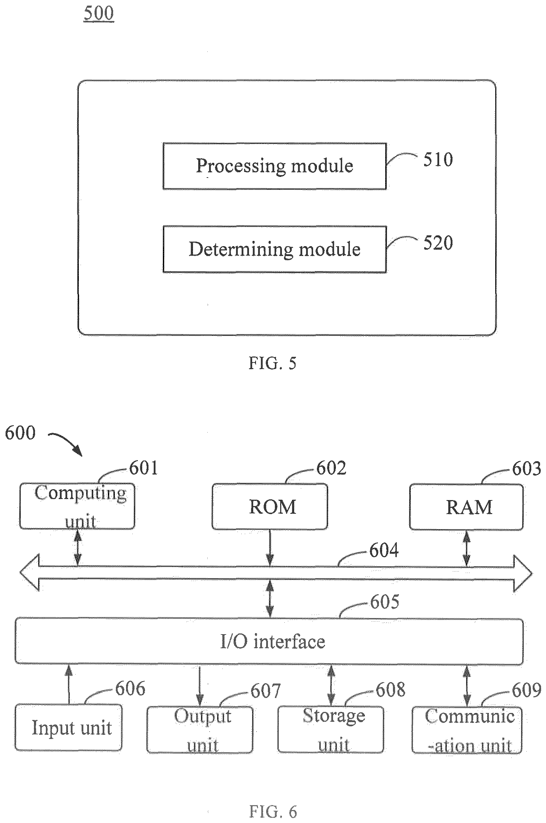

FIG. 5 schematically shows a block diagram of an apparatus of processing a voice for a vehicle according to an embodiment of the present disclosure.

As shown in FIG. 5, the apparatus of processing a voice for a vehicle in the embodiments of the present disclosure includes, for example, a processing module 510 and a determining module 520.

The processing module 510 is used to separate an initial voice data in response to receiving the initial voice data from a plurality of regions inside the vehicle, so as to obtain a plurality of voice sub-data and a description information for each voice sub-data of the plurality of voice sub-data, the plurality of voice sub-data correspond to the plurality of regions respectively, and the description information for each voice sub-data indicates the region corresponding to the each voice sub-data in the plurality of regions. According to the embodiments of the present disclosure, the processing module 510 may, for example, perform the operation S210 described above with reference to FIG. 2, which will not be repeated here.

The determining module 520 is used to determine a voice working mode of the vehicle based on the plurality of voice sub-data. According to the embodiments of the present disclosure, the determining module 520 may, for example, perform the operation S220 described above with reference to FIG. 2, which will not be repeated here.

According to the embodiments of the present disclosure, the determining module 520 includes, for example, a first recognizing sub-module and a determining sub-module. The first recognizing sub-module is used to perform a voice recognition on the plurality of voice sub-data respectively, so as to obtain a plurality of voice recognition results, the plurality of voice recognition results correspond to the plurality of voice sub-data respectively. The determining sub-module is used to determine the voice working mode of the vehicle based on the plurality of voice recognition results.

According to the embodiments of the present disclosure, the plurality of regions includes a main driving region and a sub driving region; the plurality of voice sub-data includes a first voice sub-data and a second voice sub-data, a description information for the first voice sub-data indicates that the first voice sub-data is from the main driving region, and a description information for the second voice sub-data indicates that the second voice sub-data is from the sub driving region. The determining sub-module includes at least one of a first determining unit and a second determining unit. The first determining unit is used to determine that the voice working mode of the vehicle is a first voice working mode, in response to the voice recognition result corresponding to the first voice sub-data containing a first wake-up content. The second determining unit is used to determine that the voice working mode of the vehicle is a second voice working mode, in response to the voice recognition result corresponding to the second voice sub-data containing a second wake-up content.

According to the embodiments of the present disclosure, the apparatus 500 may further include a first controlling module used to control the vehicle to operate based on the first voice working mode. The first controlling module includes a first extracting sub-module, a second recognizing sub-module and a first operating sub-module. The first extracting sub-module is used to extract, from a received first target voice data, a third voice sub-data from the main driving region. The second recognizing sub-module is used to perform a voice recognition on the third voice sub-data, so as to obtain a first operation instruction, the first operation instruction is associated with the main driving region. The first operating sub-module is used to operate based on the first operation instruction.

According to the embodiments of the present disclosure, the apparatus 500 may further include a second controlling module used to control the vehicle to operate based on the second voice working mode. The second controlling module includes a second extracting sub-module, a third recognizing sub-module and a second operating sub-module. The second extracting sub-module is used to extract, from a received second target voice data, a fourth voice sub-data from the sub driving region. The third recognizing sub-module is used to perform a voice recognition on the fourth voice sub-data, so as to obtain a second operation instruction, the second operation instruction is associated with the sub driving region. The second operating sub-module is used to operate based on the second operation instruction.

According to the embodiments of the present disclosure, the vehicle includes a main wake-up engine and a sub wake-up engine; and the first recognizing sub-module includes a first recognizing unit and a second recognizing unit. The first recognizing unit is used to recognize the first voice sub-data by using the main wake-up engine, so as to obtain the voice recognition result for the first voice sub-data. The second recognizing unit is used to recognize the second voice sub-data by using the sub wake-up engine, so as to obtain the voice recognition result for the second voice sub-data.

According to the embodiments of the present disclosure, the processing module 510 is further used to separate the initial voice data by using a blind source separation algorithm.

In the technical solution of the present disclosure, the collection, storage, use, processing, transmission, provision, disclosure, and application of the user's personal information involved are all in compliance with relevant laws and regulations, take essential confidentiality measures, and do not violate public order and good customs.

In the technical solution of the present disclosure, authorization or consent is obtained from the user before the user's personal information is obtained or collected.

According to the embodiments of the present disclosure, the present disclosure also provides an electronic device, a readable storage medium and a computer program product.

FIG. 6 is a block diagram of an electronic device used to implement voice processing in the embodiments of the present disclosure.

FIG. 6 illustrates a schematic block diagram of an example electronic device 600 that may be used to implement embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 6, the device 600 includes a computing unit 601, which may execute various appropriate actions and processing according to a computer program stored in a read only memory (ROM) 602 or a computer program loaded from a storage unit 608 into a random access memory (RAM) 603. Various programs and data required for the operation of the device 600 may also be stored in the RAM 603. The computing unit 601, the ROM 602 and the RAM 603 are connected to each other through a bus 604. An input/output (I/O) interface 605 is also connected to the bus 604.

The I/O interface 605 is connected to a plurality of components of the device 600, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices through the computer network such as the Internet and/or various telecommunication networks.

The computing unit 601 may be various general-purpose and/or special-purpose processing components with processing and computing capabilities. Some examples of computing unit 601 include, but are not limited to, central processing unit (CPU), graphics processing unit (GPU), various dedicated artificial intelligence (AI) computing chips, various computing units that run machine learning model algorithms, digital signal processing DSP and any appropriate processor, controller, microcontroller, etc. The computing unit 601 executes the various methods and processes described above, such as the method of processing a voice for a vehicle. For example, in some embodiments, the method of processing a voice for a vehicle may be implemented as computer software programs, which are tangibly contained in the machine-readable medium, such as the storage unit 608. In some embodiments, part or all of the computer program may be loaded and/or installed on the device 600 via the ROM 602 and/or the communication unit 609. When the computer program is loaded into the RAM 603 and executed by the computing unit 601, one or more steps of the method of processing a voice for a vehicle described above may be executed. Alternatively, in other embodiments, the computing unit 601 may be configured to execute the method of processing a voice for a vehicle in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, complex programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, device, or equipment, or any suitable combination of the above-mentioned content. More specific examples of the machine-readable storage media would include electrical connections based on one or more wires, portable computer disks, hard disks, random access memory (RAM), read-only memory (ROM), erasable programmable read-only memory (EPROM or flash memory), optical fiber, portable compact disk read-only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local area network (LAN), wide area network (WAN) and the Internet.

The computer system may include a client and a server. The client and the server are generally far away from each other and usually interact through the communication network. The relationship between the client and the server is generated by computer programs that run on the respective computers and have a client-server relationship with each other.

It should be understood that the various forms of processes shown above may be used to reorder, add or delete steps. For example, the steps described in the present disclosure may be executed in parallel, sequentially or in a different order, as long as the desired result of the technical solution disclosed in the present disclosure may be achieved, which is not limited herein.

The above-mentioned implementations do not constitute a limitation on the protection scope of the present disclosure. Those skilled in the art should understand that various modifications, combinations, sub-combinations and substitutions may be made according to design requirements and other factors. Any modification and improvement made within the principle of the present disclosure shall be included in the protection scope of the appended claims.

## Claims

1. A method (200) of processing a voice for a vehicle (400), comprising:
separating (S210, S320) an initial voice data (A) in response to receiving (S310) the initial voice data (A) from a plurality of regions inside the vehicle (400), so as to obtain a plurality of voice sub-data (a₁, a₂) and a description information for each voice sub-data of the plurality of voice sub-data (a₁, a₂), wherein the plurality of voice sub-data (a₁, a₂) correspond to the plurality of regions respectively, and the description information for each voice sub-data (a₁, a₂) indicates the region corresponding to the each voice sub-data (a₁, a₂) in the plurality of regions; and
determining (S220) a voice working mode of the vehicle (400) based on the plurality of voice sub-data (a₁, a₂),
wherein the determining (S220) a voice working mode of the vehicle (400) based on the plurality of voice sub-data comprises:
performing (S330) a voice recognition on the plurality of voice sub-data respectively, so as to obtain a plurality of voice recognition results, wherein the plurality of voice recognition results correspond to the plurality of voice sub-data respectively; and
determining the voice working mode of the vehicle (400) based on the plurality of voice recognition results,
wherein the plurality of regions comprises a main driving region and a sub driving region; the plurality of voice sub-data comprises a first voice sub-data (a₁) and a second voice sub-data (a₂), a description information for the first voice sub-data (a₁) indicates that the first voice sub-data (a₁) is from the main driving region, and a description information for the second voice sub-data (a₂) indicates that the second voice sub-data (a₂) is from the sub driving region; and
wherein the determining the voice working mode of the vehicle (400) based on the
determining (S350) that the voice working mode of the vehicle (400) is a first voice working mode, in response to the voice recognition result corresponding to the first voice sub-data (a₁) containing a first wake-up content; and
determining (S380) that the voice working mode of the vehicle (400) is a second voice working mode, in response to the voice recognition result corresponding to the second voice sub-data (a₂) containing a second wake-up content.

2. The method according to claim 1, further comprising: controlling (S360) the vehicle (400) to operate based on the first voice working mode;
wherein the controlling (S360) the vehicle (400) to operate based on the first voice working mode comprises:
extracting, from a received first target voice data (B), a third voice sub-data (b) from the main driving region;
performing a voice recognition on the third voice sub-data (b), so as to obtain a first operation instruction (b₂), wherein the first operation instruction (b₂) is associated with the main driving region; and
operating based on the first operation instruction (b₂).

3. The method according to claim 1, further comprising: controlling (S390) the vehicle (400) to operate based on the second voice working mode;
wherein controlling (S390) the vehicle (400) to operate based on the second voice working mode comprises:
extracting, from a received second target voice data, a fourth voice sub-data from the sub driving region;
performing a voice recognition on the fourth voice sub-data, so as to obtain a second operation instruction, wherein the second operation instruction is associated with the sub driving region; and
operating based on the second operation instruction.

4. The method according to claim 1, wherein the vehicle (400) comprises a main wake-up engine (422) and a sub wake-up engine (423); and
wherein the performing a voice recognition on the plurality of voice sub-data respectively, so as to obtain a plurality of voice recognition results comprises:
recognizing the first voice sub-data (a₁) by using the main wake-up engine (422), so as to obtain the voice recognition result for the first voice sub-data (ai); and
recognizing the second voice sub-data (a₂) by using the sub wake-up engine (423), so as to obtain the voice recognition result for the second voice sub-data (a₂).

5. The method according to any one of claims 1 to 4, wherein the separating an initial voice data comprises:
separating the initial voice data (A) by using a blind source separation algorithm.

6. An apparatus (500) of processing a voice for a vehicle, comprising:
a processing module (510) configured to separate an initial voice data in response to receiving the initial voice data from a plurality of regions inside the vehicle, so as to obtain a plurality of voice sub-data and a description information for each voice sub-data of the plurality of voice sub-data, wherein the plurality of voice sub-data correspond to the plurality of regions respectively, and the description information for each voice sub-data indicates the region corresponding to the each voice sub-data in the plurality of regions; and
a determining module (520) configured to determine a voice working mode of the vehicle based on the plurality of voice sub-data,
wherein the determining module (520) comprises:
a first recognizing sub-module configured to perform a voice recognition on the plurality of voice sub-data respectively, so as to obtain a plurality of voice recognition results, wherein the plurality of voice recognition results correspond to the plurality of voice sub-data respectively; and
a determining sub-module configured to determine the voice working mode of the vehicle based on the plurality of voice recognition results,
wherein the plurality of regions comprises a main driving region and a sub driving region; the plurality of voice sub-data comprises a first voice sub-data and a second voice sub-data, a description information for the first voice sub-data indicates that the first voice sub-data is from the main driving region, and a description information for the second voice sub-data indicates that the second voice sub-data is from the sub driving region; and
wherein the determining sub-module comprises at least one of:
a first determining unit configured to determine that the voice working mode of the vehicle is a first voice working mode, in response to the voice recognition result corresponding to the first voice sub-data containing a first wake-up content; and
a second determining unit configured to determine that the voice working mode of the vehicle is a second voice working mode, in response to the voice recognition result corresponding to the second voice sub-data containing a second wake-up content.

7. The apparatus according to claim 6, further comprising: a first controlling module configured to control the vehicle to operate based on the first voice working mode;
wherein the first controlling module comprises:
a first extracting sub-module configured to extract, from a received first target voice data, a third voice sub-data from the main driving region;
a second recognizing sub-module configured to perform a voice recognition on the third voice sub-data, so as to obtain a first operation instruction, wherein the first operation instruction is associated with the main driving region; and
a first operating sub-module configured to operate based on the first operation instruction,
the apparatus further comprises: a second controlling module configured to control the vehicle to operate based on the second voice working mode;
wherein the second controlling module comprises:
a second extracting sub-module configured to extract, from a received second target voice data, a fourth voice sub-data from the sub main driving region;
a third recognizing sub-module configured to perform a voice recognition on the fourth voice sub-data, so as to obtain a second operation instruction, wherein the second operation instruction is associated with the sub driving region; and
a second operating sub-module configured to operate based on the second operation instruction.

8. The apparatus according to claim 6, wherein the vehicle comprises a main wake-up engine and a sub driving engine; and
wherein the first recognizing sub-module comprises:
a first recognizing unit configured to recognize the first voice sub-data by using the main wake-up engine, so as to obtain the voice recognition result for the first voice sub-data; and
a second recognizing unit configured to recognize the second voice sub-data by using the sub wake-up engine, so as to obtain the voice recognition result for the second voice sub-data,
wherein the processing module (510) is further configured to:
separate the initial voice data by using a blind source separation algorithm.

9. An electronic device, comprising:
at least one processor; and
a memory communicatively connected with the at least one processor,
wherein the memory stores instructions executable by the at least one processor, and the instructions, when executed by the at least one processor, cause the at least one processor to implement the method of any one of claims 1 to 5.

10. A non-transitory computer-readable storage medium storing computer instructions, wherein the computer instructions are configured to cause a computer to implement the method of any one of claims 1 to 5.

11. A computer program product, comprising a computer program, wherein the computer program, when executed by a processor, implements the method of any one of claims 1 to 5.

## Patentansprüche

1. Ein Verfahren (200) zum Verarbeiten einer Stimme für ein Fahrzeug (400), wobei das Verfahren folgende Schritte aufweist:
Trennen (S210, S320) von Anfangssprachdaten (A) als Antwort auf ein Empfangen (S310) der Anfangssprachdaten (A) aus einer Mehrzahl von Regionen innerhalb des Fahrzeugs (400), um eine Mehrzahl von Sprachteildaten (a₁, a₂) und eine Beschreibungsinformation für jedes Sprachteildatum der Mehrzahl von Sprachteildaten (a₁, a₂) zu erhalten, wobei die Mehrzahl von Sprachteildaten (a₁, a₂) jeweils der Mehrzahl von Regionen entspricht und die Beschreibungsinformation für jedes Sprachteildatum (a₁, a₂) die Region anzeigt, die jedem Sprachteildatum (a₁, a₂) in der Mehrzahl von Regionen entspricht; und
Bestimmen (S220) eines Sprachenarbeitsmodus des Fahrzeugs (400) auf Basis der Mehrzahl von Sprachteildaten (a₁, a₂),
wobei das Bestimmen (S220) eines Sprachenarbeitsmodus des Fahrzeugs (400) auf Basis der Mehrzahl von Sprachteildaten folgende Schritte aufweist:
Durchführen (S330) einer Spracherkennung jeweils an der Mehrzahl von Sprachteildaten, um eine Mehrzahl von Spracherkennungsergebnissen zu erhalten, wobei die Mehrzahl von Spracherkennungsergebnissen jeweils der Mehrzahl von Sprachteildaten entspricht; und
Bestimmen des Sprachenarbeitsmodus des Fahrzeugs (400) auf Basis der Mehrzahl von Spracherkennungsergebnissen,
wobei die Mehrzahl von Regionen eine Hauptfahrregion und eine Nebenfahrregion aufweist; die Mehrzahl von Sprachteildaten ein erstes Sprachteildatum (a₁) und ein zweites Sprachteildatum (a₂) aufweist, wobei eine Beschreibungsinformation für das erste Sprachteildatum (a₁) anzeigt, dass das erste Sprachteildatum (a₁) aus der Hauptfahrregion stammt und eine Beschreibungsinformation für das zweite Sprachteildatum (a₂) anzeigt, dass das zweite Sprachteildatum (a₂) aus der Nebenfahrregion stammt; und
wobei das Bestimmen des Sprachenarbeitsmodus des Fahrzeugs (400) auf Basis der Mehrzahl von Spracherkennungsergebnissen zumindest einen der folgenden Schritte aufweist:
Bestimmen (S350), dass der Sprachenarbeitsmodus des Fahrzeugs (400) ein erster Sprachenarbeitsmodus ist, als Antwort darauf, dass das Spracherkennungsergebnis, das dem ersten Sprachteildatum (a₁) entspricht, einen ersten Aufweckinhalt enthält; und
Bestimmen (S380), dass der Sprachenarbeitsmodus des Fahrzeugs (400) ein zweiter Sprachenarbeitsmodus ist, als Antwort darauf, dass das Spracherkennungsergebnis, das dem zweiten Sprachteildatum (a₂) entspricht, einen zweiten Aufweckinhalt enthält.

2. Das Verfahren gemäß Anspruch 1, das ferner folgende Schritte aufweist: Steuern (S360) des Fahrzeugs (400), sodass dasselbe auf Basis des ersten Sprachenarbeitsmodus operiert;
wobei das Steuern (S360) des Fahrzeugs (400), sodass dasselbe auf Basis des ersten Sprachenarbeitsmodus operiert, folgende Schritte aufweist:
Extrahieren, aus empfangenen ersten Zielsprachdaten (B), eines dritten Sprachteildatums (b) aus der Hauptfahrregion;
Durchführen einer Spracherkennung an dem dritten Sprachteildatum (b), um einen ersten Operationsbefehl (b₂) zu erhalten, wobei der erste Operationsbefehl (b₂) der Hauptfahrregion zugeordnet ist; und
Operieren auf Basis des ersten Operationsbefehls (b₂).

3. Das Verfahren gemäß Anspruch 1, das ferner folgende Schritte aufweist: Steuern (S390) des Fahrzeugs (400), sodass dasselbe auf Basis des zweiten Sprachenarbeitsmodus operiert;
wobei Steuern (S390) des Fahrzeugs (400), sodass dasselbe auf Basis des zweiten Sprachenarbeitsmodus operiert, folgende Schritte aufweist:
Extrahieren, aus empfangenen zweiten Zielsprachdaten, eines vierten Sprachteildatums aus der Nebenfahrregion;
Durchführen einer Spracherkennung an dem vierten Sprachteildatum, um einen zweiten Operationsbefehl zu erhalten, wobei der zweite Operationsbefehl der Nebenfahrregion zugeordnet ist; und
Operieren auf Basis des zweiten Operationsbefehls.

4. Das Verfahren gemäß Anspruch 1, bei dem das Fahrzeug (400) eine Hauptaufweckmaschine (422) und eine Nebenaufweckmaschine (423) aufweist; und
wobei das Durchführen einer Spracherkennung jeweils an der Mehrzahl von Sprachteildaten, um eine Mehrzahl von Spracherkennungsergebnissen zu erhalten, folgende Schritte aufweist:
Erkennen des ersten Sprachteildatums (a₁) durch Verwenden der Hauptaufweckmaschine (422), um das Spracherkennungsergebnis für das erste Sprachteildatum (a₁) zu erhalten; und
Erkennen des zweiten Sprachteildatums (a₂) durch Verwenden der Nebenaufweckmaschine (423), um das Spracherkennungsergebnis für das zweite Sprachteildatum (a₂) zu erhalten.

5. Das Verfahren gemäß einem der Ansprüche 1 bis 4, bei dem das Trennen von Anfangssprachdaten folgenden Schritt aufweist:
Trennen der Anfangssprachdaten (A) durch Verwendung eines blinden Quelltrennungsalgorithmus.

6. Eine Vorrichtung (500) zum Verarbeiten einer Stimme für ein Fahrzeug, die folgende Merkmale aufweist:
ein Verarbeitungsmodul (510), das dazu konfiguriert ist, Anfangssprachdaten als Antwort auf ein Empfangen der Anfangssprachdaten aus einer Mehrzahl von Regionen innerhalb des Fahrzeugs zu trennen, um eine Mehrzahl von Sprachteildaten und eine Beschreibungsinformation für jedes Sprachteildatum der Mehrzahl von Sprachteildaten zu erhalten, wobei die Mehrzahl von Sprachteildaten jeweils der Mehrzahl von Regionen entspricht und die Beschreibungsinformation für jedes Sprachteildatum die Region anzeigt, die jedem Sprachteildatum in der Mehrzahl von Regionen entspricht; und
ein Bestimmungsmodul (520), das dazu konfiguriert ist, einen Sprachenarbeitsmodus des Fahrzeugs auf Basis der Mehrzahl von Sprachteildaten zu bestimmen,
wobei das Bestimmungsmodul (520) folgende Merkmale aufweist:
ein erstes Erkennungsteilmodul, das dazu konfiguriert ist, eine Spracherkennung jeweils an der Mehrzahl der Sprachteildaten durchzuführen, um eine Mehrzahl von Spracherkennungsergebnissen zu erhalten, wobei die Mehrzahl von Spracherkennungsergebnissen jeweils der Mehrzahl von Sprachteildaten entspricht; und
ein Bestimmungsteilmodul, das dazu konfiguriert ist, den Sprachenarbeitsmodus des Fahrzeugs auf Basis der Mehrzahl von Spracherkennungsergebnissen zu bestimmen,
wobei die Mehrzahl von Regionen eine Hauptfahrregion und eine Nebenfahrregion aufweist; die Mehrzahl von Sprachteildaten ein erstes Sprachteildatum und ein zweites Sprachteildatum aufweist, wobei eine Beschreibungsinformation für das erste Sprachteildatum anzeigt, dass das erste Sprachteildatum aus der Hauptfahrregion stammt und eine Beschreibungsinformation für das zweite Sprachteildatum anzeigt, dass das zweite Sprachteildatum aus der Nebenfahrregion stammt; und
wobei das Bestimmungsteilmodul zumindest eines der folgenden Merkmale aufweist:
eine erste Bestimmungseinheit, die dazu konfiguriert ist, zu bestimmen, dass der Sprachenarbeitsmodus des Fahrzeugs ein erster Sprachenarbeitsmodus ist, als Antwort darauf, dass das Spracherkennungsergebnis, das dem ersten Sprachteildatum entspricht, einen ersten Aufweckinhalt enthält; und
eine zweite Bestimmungseinheit, die dazu konfiguriert ist, zu bestimmen, dass der Sprachenarbeitsmodus des Fahrzeugs ein zweiter Sprachenarbeitsmodus ist, als Antwort darauf, dass das Spracherkennungsergebnis, das dem zweiten Sprachteildatum entspricht, einen zweiten Aufweckinhalt enthält.

7. Die Vorrichtung gemäß Anspruch 6, die ferner folgendes Merkmal aufweist: ein erstes Steuermodul, das dazu konfiguriert ist, das Fahrzeug so zu steuern, dass es auf Basis des ersten Sprachenarbeitsmodus operiert;
wobei das erste Steuermodul folgende Merkmale aufweist:
ein erstes Extraktionsteilmodul, das dazu konfiguriert ist, aus empfangenen ersten Zielsprachdaten ein drittes Sprachteildatum aus der Hauptfahrregion zu extrahieren;
ein zweites Erkennungsteilmodul, das dazu konfiguriert ist, eine Spracherkennung an dem dritten Sprachteildatum durchzuführen, um einen ersten Operationsbefehl zu erhalten, wobei der erste Operationsbefehl der Hauptfahrregion zugeordnet ist; und
ein erstes Operationsteilmodul, das dazu konfiguriert ist, auf Basis des ersten Operationsbefehls zu operieren,
wobei die Vorrichtung ferner folgendes Merkmal aufweist: ein zweites Steuermodul, das dazu konfiguriert ist, das Fahrzeug so zu steuern, dass es auf Basis des zweiten Sprachenarbeitsmodus operiert;
wobei das zweite Steuermodul folgende Merkmale aufweist:
ein zweites Extraktionsteilmodul, das dazu konfiguriert ist, aus empfangenen zweiten Zielsprachdaten ein viertes Sprachteildatum aus der Nebenhauptfahrregion zu extrahieren;
ein drittes Erkennungsteilmodul, das dazu konfiguriert ist, eine Spracherkennung an dem vierten Sprachteildatum durchzuführen, um einen zweiten Operationsbefehl zu erhalten, wobei der zweite Operationsbefehl der Nebenfahrregion zugeordnet ist; und
ein zweites Operationsteilmodul, das dazu konfiguriert ist, auf Basis des zweiten Operationsbefehls zu operieren,

8. Die Vorrichtung gemäß Anspruch 6, bei der das Fahrzeug eine Hauptaufweckmaschine und eine Nebenfahrmaschine aufweist; und
wobei das erste Erkennungsteilmodul folgende Merkmale aufweist:
eine erste Erkennungseinheit, die dazu konfiguriert ist, das erste Sprachteildatum durch Verwenden der Hauptaufweckmaschine zu erkennen, um das Spracherkennungsergebnis für das erste Sprachteildatum zu erhalten; und
eine zweite Erkennungseinheit, die dazu konfiguriert ist, das zweite Sprachteildatum durch Verwenden der Nebenaufweckmaschine, um das Spracherkennungsergebnis für das zweite Sprachteildatum, zu erhalten,
wobei das Verarbeitungsmodul (510) ferner konfiguriert ist zum:
Trennen der Anfangssprachdaten durch Verwendung eines blinden Quelltrennungsalgorithmus.

9. Ein elektronisches Bauelement, das folgende Merkmale aufweist:
zumindest einen Prozessor; und
einen Speicher, der mit dem zumindest einen Prozessor kommunikationsverbunden ist,
wobei der Speicher Befehle speichert, die von dem zumindest einen Prozessor ausführbar sind, und die Befehle bei Ausführung durch den zumindest einen Prozessor den zumindest einen Prozessor dazu veranlassen, das Verfahren gemäß einem der Ansprüche 1 bis 5 zu implementieren.

10. Ein nichtflüchtiges, computerlesbares Speichermedium, das Computerbefehle speichert, wobei die Computerbefehle dazu konfiguriert sind, einen Computer dazu zu veranlassen, das Verfahren gemäß einem der Ansprüche 1 bis 5 zu implementieren.

11. Ein Computerprogrammprodukt, das ein Computerprogramm aufweist, wobei das Computerprogramm bei Ausführung durch einen Prozessor das Verfahren gemäß einem der Ansprüche 1 bis 5 implementiert.

## Revendications

1. Procédé (200) de traitement de la parole pour un véhicule (400), comprenant le fait de:
séparer (S210, S320) une donnée de la parole initiale (A) en réponse à la réception (S310) de la donnée de la parole initiale (A) provenant d'une pluralité de régions à l'intérieur du véhicule (400), de manière à obtenir une pluralité de sous-données de la parole (a₁, a₂) et une information de description pour chaque sous-donnée de la parole de la pluralité de sous-données de la parole (a₁, a₂), où la pluralité de sous-données de la parole (a₁, a₂) correspondent respectivement à la pluralité de régions, et l'information de description pour chaque sous-donnée de la parole (a₁, a₂) indique la région correspondant à chaque sous-donnée de la parole (a₁, a₂) dans la pluralité de régions; et
déterminer (S220) un mode de travail de la parole du véhicule (400) sur base de la pluralité de sous-données de la parole (a₁, a₂),
dans lequel la détermination (S220) d'un mode de travail de la parole du véhicule (400) sur base de la pluralité de sous-données de la parole comprend le fait de:
effectuer (S330) une reconnaissance de la parole respectivement sur la pluralité de sous-données de la parole, de manière à obtenir une pluralité de résultats de reconnaissance de la parole, où la pluralité de résultats de reconnaissance de la parole correspondent respectivement à la pluralité de sous-données de la parole; et
déterminer le mode de travail de la parole du véhicule (400) sur base de la pluralité de résultats de reconnaissance de la parole,
dans lequel la pluralité de régions comprend une région de conduite principale et une sous-région de conduite; la pluralité de sous-données de la parole comprend une première sous-donnée de la parole (a₁) et une deuxième sous-donnée de la parole (a₂), une information de description pour la première sous-donnée de la parole (a₁) indique que la première sous-donnée de la parole (a₁) provient de la région de conduite principale, et une information de description pour la deuxième sous-donnée de la parole (a₂) indique que la deuxième sous-donnée de la parole (a₂) provient de la sous-région de conduite; et
dans lequel la détermination du mode de travail de la parole du véhicule (400) sur base de la pluralité de résultats de reconnaissance de la parole comprend au moins l'un parmi le fait de:
déterminer (S350) que le mode de travail de la parole du véhicule (400) est un premier mode de travail de la parole, en réponse au résultat de reconnaissance de la parole correspondant à la première sous-donnée de la parole (a₁) contenant un premier contenu de réveil; et
déterminer (S380) que le mode de travail de la parole du véhicule (400) est un deuxième mode de travail de la parole, en réponse au résultat de reconnaissance de la parole correspondant à la deuxième sous-donnée de la parole (a₂) contenant un deuxième contenu de réveil.

2. Procédé selon la revendication 1, comprenant par ailleurs le fait de: commander (S360) le véhicule (400) pour fonctionner sur base du premier mode de travail de la parole;
dans lequel la commande (S360) du véhicule (400) pour fonctionner sur base du premier mode de travail de la parole comprend le fait de:
extraire, d'une première donnée de la parole cible (B) reçue, une troisième sous-donnée de la parole (b) provenant de la région de conduite principale;
effectuer une reconnaissance de la parole sur la troisième sous-donnée de la parole (b), de manière à obtenir une première instruction de fonctionnement (b₂), où la première instruction de fonctionnement (b₂) est associée à la région de conduite principale; et
fonctionner sur base de la première instruction de fonctionnement (b₂).

3. Procédé selon la revendication 1, comprenant par ailleurs le fait de: commander (S390) le véhicule (400) pour fonctionner sur base du deuxième mode de travail de la parole;
dans lequel la commande (S390) du véhicule (400) pour fonctionner sur base du deuxième mode de travail de la parole comprend le fait de:
extraire, d'une deuxième donnée de la parole cible reçue, une quatrième sous-donnée de la parole de la sous-région de conduite;
effectuer une reconnaissance de la parole sur la quatrième sous-donnée de la parole, de manière à obtenir une deuxième instruction de fonctionnement, où la deuxième instruction de fonctionnement est associée à la sous-région de conduite; et
fonctionner sur base de la deuxième instruction de fonctionnement.

4. Procédé selon la revendication 1, dans lequel le véhicule (400) comprend un moteur de réveil principal (422) et un moteur de réveil secondaire (423); et
dans lequel la réalisation d'une reconnaissance de la parole sur respectivement la pluralité de sous-données de la parole, de manière à obtenir une pluralité de résultats de reconnaissance de la parole, comprend le fait de:
reconnaître la première sous-donnée de la parole (a₁) à l'aide du moteur de réveil principal (422), de manière à obtenir le résultat de reconnaissance de la parole pour la première sous-donnée de la parole (a₁); et
reconnaître la deuxième sous-donnée de la parole (a₂) à l'aide du moteur de réveil secondaire (423), de manière à obtenir le résultat de reconnaissance de la parole pour la deuxième sous-donnée de la parole (a₂).

5. Procédé selon l'une quelconque des revendications 1 à 4, dans lequel la séparation d'une donnée de la parole initiale comprend le fait de:
séparer les données de la parole initiales (A) à l'aide d'un algorithme de séparation de sources aveugle.

6. Appareil (500) de traitement de la parole pour un véhicule, comprenant:
un module de traitement (510) configuré pour séparer une donnée de la parole initiale en réponse à la réception des données de la parole initiales provenant d'une pluralité de régions à l'intérieur du véhicule, de manière à obtenir une pluralité de sous-données de la parole et une information de description pour chaque sous-donnée de la parole de la pluralité de sous-données de la parole, la pluralité de sous-données de la parole correspondant respectivement à la pluralité de régions, et l'information de description pour chaque sous-donnée de la parole indique la région correspondant à chaque sous-donnée de la parole dans la pluralité de régions; et
un module de détermination (520) configuré pour déterminer un mode de travail de la parole du véhicule sur base de la pluralité de sous-données de la parole,
dans lequel le module de détermination (520) comprend:
un premier sous-module de reconnaissance configuré pour effectuer une reconnaissance de la parole respectivement sur la pluralité de sous-données de la parole, de manière à obtenir une pluralité de résultats de reconnaissance de la parole, où la pluralité de résultats de reconnaissance de la parole correspondent respectivement à la pluralité de sous-données de la parole; et
un sous-module de détermination configuré pour déterminer le mode de travail de la parole du véhicule sur base de la pluralité de résultats de reconnaissance de la parole,
dans lequel la pluralité de régions comprend une région de conduite principale et une sous-région de conduite; la pluralité de sous-données de la parole comprend une première sous-donnée de la parole et une deuxième sous-donnée de la parole, une information de description pour la première sous-donnée de la parole indique que la première sous-donnée de la parole provient de la région de conduite principale, et une information de description pour la deuxième sous-donnée de la parole indique que la deuxième sous-donnée de la parole provient de la sous-région de conduite; et
dans lequel le sous-module de détermination comprend au moins l'un parmi:
une première unité de détermination configurée pour déterminer que le mode de travail de la parole du véhicule est un premier mode de travail de la parole, en réponse au résultat de reconnaissance de la parole correspondant à la première sous-donnée de la parole contenant un premier contenu de réveil; et
une deuxième unité de détermination configurée pour déterminer que le mode de travail de la parole du véhicule est un deuxième mode de travail de la parole, en réponse au résultat de reconnaissance de la parole correspondant à la deuxième sous-donnée de la parole contenant un deuxième contenu de réveil.

7. Appareil selon la revendication 6, comprenant par ailleurs: un premier module de commande configuré pour commander le véhicule pour fonctionner sur base du premier mode de travail de la parole;
dans lequel le premier module de commande comprend:
un premier sous-module d'extraction configuré pour extraire, d'une première donnée de la parole cible reçue, une troisième sous-donnée de la parole provenant de la région de commande principale;
un deuxième sous-module de reconnaissance configuré pour effectuer une reconnaissance de la parole sur la troisième sous-donnée de la parole, de manière à obtenir une première instruction de fonctionnement, où la première instruction de fonctionnement est associée à la région de conduite principale; et
un premier sous-module de fonctionnement configuré pour fonctionner sur base de la première instruction de fonctionnement, l'appareil comprend par ailleurs: un deuxième module de commande configuré pour commander le véhicule pour fonctionner sur base du deuxième mode de travail de la parole;
dans lequel le deuxième module de commande comprend:
un deuxième sous-module d'extraction configuré pour extraire, d'une deuxième donnée de la parole cible reçue, une quatrième sous-donnée de la parole provenant de la sous-région de commande principale;
un troisième sous-module de reconnaissance configuré pour effectuer une reconnaissance de la parole sur la quatrième sous-donnée de la parole, de manière à obtenir une deuxième instruction de fonctionnement, où la deuxième instruction de fonctionnement est associée à la sous-région de conduite; et
un deuxième sous-module de fonctionnement configuré pour fonctionner sur base de la deuxième instruction de fonctionnement.

8. Appareil selon la revendication 6, dans lequel le véhicule comprend un moteur de réveil principal et un moteur d'entraînement secondaire; et
dans lequel le premier sous-module de reconnaissance comprend:
une première unité de reconnaissance configurée pour reconnaître la première sous-donnée de la parole à l'aide du moteur de réveil principal, de manière à obtenir le résultat de reconnaissance de la parole pour la première sous-donnée de la parole; et
une deuxième unité de reconnaissance configurée pour reconnaître la deuxième sous-donnée de la parole à l'aide du moteur de réveil secondaire, de manière à obtenir le résultat de reconnaissance de la parole pour la deuxième sous-donnée de la parole,
dans lequel le module de traitement (510) est par ailleurs configuré pour:
séparer les données de la parole initiales à l'aide d'un algorithme de séparation de sources aveugle.

9. Appareil électronique, comprenant:
au moins un processeur; et
une mémoire connectée de manière communicative à l'au moins un processeur,
dans lequel la mémoire mémorise des instructions pouvant être exécutées par l'au moins un processeur, et les instructions, lorsqu'elles sont exécutées par l'au moins un processeur, amènent l'au moins un processeur à mettre en oeuvre le procédé selon l'une quelconque des revendications 1 à 5.

10. Support de mémoire non transitoire lisible par ordinateur mémorisant des instructions d'ordinateur, où les instructions d'ordinateur sont configurées pour amener un ordinateur à mettre en oeuvre le procédé selon l'une quelconque des revendications 1 à 5.

11. Produit de programme d'ordinateur, comprenant un programme d'ordinateur, dans lequel le programme d'ordinateur, lorsqu'il est exécuté par un processeur, met en oeuvre le procédé selon l'une quelconque des revendications 1 à 5.
